# EUROPÄISCHE PATENTSCHRIFT

(11) **EP 3 296 713 B1**
(45) Veröffentlichungstag und Bekanntmachung des Hinweises auf die Patenterteilung: **15.04.2020**
(21) Anmeldenummer: 16189114.8
(22) Anmeldetag: 16.09.2016
(51) Int. Cl.: G01L 3/14

(54) **VORRICHTUNG ZUR DREHMOMENTBESTIMMUNG SOWIE ANTRIEB ZUM BETÄTIGEN EINES MASCHINENELEMENTS**
DEVICE FOR DETERMINING TORQUE, AS WELL AS A DRIVE FOR ACTUATING A MACHINE ELEMENT
DISPOSITIF DE DETERMINATION DE COUPLE ET ENTRAINEMENT DESTINE A ACTIONNER UN ELEMENT DE MACHINE

(43) Veröffentlichungstag der Anmeldung: 21.03.2018
(73) Patentinhaber: BÜSCH Armaturen Geyer GmbH, 09468 Geyer (DE)
(72) Erfinder: Lang, Joachim, 08304 Schönheide (DE); Faltenbacher, Frank, 90610 Winkelhaid (DE)
(74) Vertreter: Stippl, Hubert

(56) Entgegenhaltungen:
- EP-A1- 3 032 233
- CN-U- 203 616 030
- FR-A1- 2 573 867
- FR-A5- 2 133 210
- GB-A- 2 233 446

## Beschreibung

Die vorliegende Erfindung betrifft eine Vorrichtung zur opto-elektronischen Drehmomentbestimmung sowie einen Antrieb zum Betätigen eines Maschinenelements oder einer Armatur, insbesondere einer Schieberarmatur.

### Technologischer Hintergrund

Messvorrichtungen zur Bestimmung eines an einer Welle oder an einer Kupplung wirksamen Drehmoments sind in unterschiedlichsten Ausführungsformen bekannt. Beispielsweise kann die Drehmomentmessung mittels Dehnmessstreifen erfolgen, welche an der Oberfläche einer Achse oder Welle befestigt werden. Die Dehnung an der Zylinderoberfläche ist dem Drehmoment der Achse oder Welle direkt proportional. Damit auch eine Verdrehung bzw. Torsion der Welle messbar ist, ist es erforderlich, dass diese eine bestimmte Länge aufweist. Die Messwertübertragung erfolgt zum Beispiel über Schleifringe, die einem hohen Verschleiß unterworfen sind.

Zudem sind opto-elektronische Verfahren zur Drehmomentbestimmung bekannt, bei welchen die Torsion eines mit einem Drehmoment belasteten Bauteils, beispielsweise einer Welle, gemessen wird, indem der Überdeckungsgrad zweier nebeneinander auf der Welle angebrachter Scheiben gemessen wird. Diese haben jeweils radial an ihrem Umfang gleichmäßig verteilte Aussparungen oder Fenster. Die Aussparungen oder Fenster der beiden Scheiben sind so angeordnet, dass sie sich ohne Drehmoment vollständig überlappen. Bei einer Verdrehung bzw. Torsion der Welle verdrehen sich auch die beiden Scheiben relativ zueinander. Hierdurch entsteht eine entsprechend der Verdrehung große Öffnung zwischen den Aussparungen oder Fenstern der beiden Scheiben. Die durch die Aussparungen der Scheiben hindurchtretende Lichtintensität wird gemessen, wobei an einer Seite der Scheiben eine Lichtquelle und an der gegenüberliegenden Seite der Scheiben ein Lichtmesser angeordnet ist. Die Lichtdurchlässigkeit verändert sich proportional zum Drehmoment.

### Nächstliegender Stand der Technik

Aus DE 198 49 225 C1 ist eine Vorrichtung zur opto-elektronischen Drehmomentbestimmung an einem Maschinenelement unter Verwendung zweier an dem Maschinenelement angebrachter paralleler Kodierscheiben mit jeweils radial auf deren Umfang verteilten Rasterstrichen oder Lichtfenstern bekannt. Die Rasterstriche sind in zwei konzentrischen Zonen angeordnet. An der einen Seite der Kodierscheiben ist eine Lichtquelle angeordnet, der an der gegenüberliegenden Seite der Scheiben ein Lichtmesser in Form von Fotodioden zugeordnet ist. An dem Maschinenelement in Form einer Welle befindet sich ein Torsionsabschnitt verringerten Durchmessers, auf welchem Hülsen aufgeschrumpft sind. Die benachbarten, freien Enden der Hülsen tragen die Kodierscheiben. Beim Auftreten eines Drehmomentes werden die beiden äußeren Enden der Welle gegeneinander verdreht. Die Hülsen übertragen die Torsion auf die an ihren freien Enden sitzenden Kodierscheiben, die sich in gleichem Maße gegeneinander verdrehen. Dadurch werden die Durchtrittsquerschnitte für das hindurchtretende Licht verändert. Die sich proportional mit der Torsion ändernde durchtretende Lichtmenge wird von den Fotodioden aufgenommen und in elektrische Spannung umgesetzt. Bei der anschließenden elektronischen Weiterverarbeitung werden schließlich die Messdaten zum Drehmoment ermittelt.

Die EP 3 032 233 A1 offenbart eine Vorrichtung zur opto-elektronischen Drehmomentbestimmung mit einem ersten Kupplungsflansch, der mit einer ersten antriebseitigen Welle in Verbindung steht, sowie mit einem zweiten Kupplungsflansch, der mit einer zweiten abtriebseitigen Welle in Verbindung steht, wobei eine der beiden Wellen in axialer Richtung verschiebbar angeordnet ist. Die jeweilige Stirnfläche des ersten sowie zweiten Kupplungsflansches weist mindestens eine schiefe Ebene auf. Die schiefen Ebenen der sich gegenüberliegenden Stirnflächen bilden in einer Grundstellung einen ein Drehmoment übertragenden Verbund. Bei der Erhöhung des Drehmoments ist eine Veränderung der Drehwinkelstellung der Kupplungsflansche zueinander erfassbar und daraus das Drehmoment ermittelbar.

Aus FR 2 573 867 A1 ist eine Vorrichtung zur Messung des Drehmoments mit einem ersten Bauteil sowie einem zweiten Bauteil bekannt, wobei das erste Bauteil mit einem Antriebselement und das zweite Bauteil mit einem Abtriebselement verbindbar ist. An dem ersten Bauteil ist ein erstes Kodierelement und an dem zweiten Bauteil ein zweites Kodierelement angeordnet. Zudem sind Lichtschranken vorgesehen, die die Drehbewegung des ersten Kodierelements und die Drehbewegung des zweiten Kodierelements abtasten. Über eine elektronische Auswerteeinheit werden die von der ersten sowie zweiten Lichtschranke stammenden Signale erfasst und ausgewertet. Zwischen dem ersten und dem zweiten Bauteil ist eine elastische Torsionsklinge angeordnet. Die elastische Torsionsklinge ist mit einem Ende im Inneren einer gabelförmigen Aufnahme an der Antriebswelle befestigt und mit ihrem anderen Ende an der Stirnseite der Abtriebswelle.

Die CN 203 616 030 U offenbart einen Drehmomentsensor mit einer Eingangssowie einer Ausgangswelle, an denen jeweils eine Kodierscheibe angeordnet ist. Um die einander zugewandten Wellen befindet sich eine Torsionsfeder, die mit ihrem jeweiligen Ende mit der Eingangs- und der Ausgangswelle verbunden ist. Während der Messung wird das Drehmoment durch die Eingangswelle an die Torsionsfeder geschickt, welche das Drehmoment an die Abtriebswelle durch die Energiespeicherung der Torsionsfeder sendet. Bei Veränderung des Drehmoments ist sodann eine Veränderung der Drehwinkelstellung der Antriebswelle und Abtriebswelle zueinander erfassbar.

Die aus FR 2 133 210 A5 bekannte Vorrichtung zur Drehmomentmessung weist ein Lenkrad sowie ein gegenüberliegendes Schwungrad auf, die jeweils einander zugewandte Stifte aufweisen. Zwischen den Stiften sind Schraubenfedern angeordnet, welche gemäß einem darauf wirkenden Drehmoment verformbar sind, sodass bei Veränderung des Drehmoments eine Veränderung der Drehwinkelstellung von Lenkrad zu Schwungrad zueinander erfassbar ist.

Die GB2 233 446 A offenbart eine weitere bekannte Form eines opto-elektronischen Drehmomentsensors.

### Aufgabe der vorliegenden Erfindung

Die Aufgabe der vorliegenden Erfindung besteht darin, eine neuartige Vorrichtung zur opto-elektronischen Drehmomentbestimmung zur Verfügung zu stellen, welche ohne großen Aufwand eine genaue Drehmomenterfassung ermöglicht.

### Lösung der Aufgabe

Die vorstehende Aufgabe wird durch die gesamte Lehre des Patentanspruchs 1 gelöst. Der unabhängige Patentanspruch 14 betrifft einen Antrieb zum Betätigen eines Maschinenelements oder einer Armatur, insbesondere einer Schieberarmatur, welche mit der erfindungsgemäßen Vorrichtung zur opto-elektronischen Drehmomentbestimmung ausgestattet ist. Zweckmäßige Ausgestaltungen der vorliegenden Erfindung sind in den abhängigen Ansprüchen beansprucht. Zwischen dem ersten und dem zweiten Bauteil ist mindestens ein elastisches Element vorgesehen, das gemäß einem darauf wirkenden Drehmoment verformbar ist, und bei Veränderung des Drehmoments eine Veränderung der Drehwinkelstellung der Bauteile zueinander erfassbar und daraus das Drehmoment ermittelbar ist. Da die Relativ-Verdrehung von erstem und zweitem Bauteil in direkter Abhängigkeit von dem aufgebrachten Drehmoment erfolgt, kann die Messung mit hoher Genauigkeit erfolgen. Die Verdrehung von erstem und zweitem Bauteil zueinander erfolgt gegen die Kraft des mindestens einen elastischen Elements, womit eine sehr reaktionsschnelle Messung ermöglicht wird, d.h. die Verformung des elastischen Elements und damit die Ermittlung des Drehmoments reagiert unmittelbar auf Drehmomentänderung. Die Drehwinkelstellung des jeweiligen Bauteils wird durch Lichtschranken erfasst. Aus dem Drehwinkelversatz bzw. dem daraus resultierenden Zeitversatz der Drehwinkelstellung der Bauteile wird schließlich das Drehmoment ermittelt. Es ist sowohl eine Bestimmung von sehr geringen Drehmomenten als auch von relativ hohen Drehmomenten möglich, ohne dass wesentliche bauliche Veränderungen durchgeführt werden müssen oder Sonderkomponenten notwendig sind. Lediglich die elastische Kraft bzw. Federkraft des elastischen Elements kann je nach dem zu übertragenden Drehmoment ausgewählt werden. Da das elastische Element unmittelbar auf die Drehmomentänderung reagiert, ist die Anordnung nahezu reibungsfrei. Damit kann eine sofortige und fehlerfreie Bestimmung des Drehmoments erfolgen. Die erfindungsgemäße Vorrichtung ermöglicht es mittels der Lichtschranken zudem, auch in einfacher und sehr genauer Weise eine Drehmomentmessung durchzuführen.

Erfindungsgemäß ist die Vorrichtung so ausgestaltet, dass das erste Bauteil einen Steg aufweist, der Steg zum zweiten Bauteil über einen festgelegten Winkelbereich verschwenkbar ist, während nur das zweite Bauteil das elastische Element umfasst, der Steg am elastischen Element angreift und das elastische Element bei Verschwenken des Stegs unmittelbar von diesem mit einer Kraft beaufschlagbar ist, das zweite Bauteil mindestens eine Ausnehmung aufweist, in die das elastische Element hineinragt und in die der Steg eingreift, wobei das elastische Element in einer weiteren Ausnehmung am zweiten Bauteil angeordnet ist und von dort aus in die Ausnehmung, in welche auch der Steg eingreift, hineinragt. Es ist nicht notwendig, weitere das Drehmoment übertragende Elemente zwischenzuschalten. Damit ist eine relativ einfache, aber sehr stabile Konstruktion geschaffen. Zudem ermöglicht die unmittelbare Einwirkung des am ersten Bauteil angeordneten Stegs auf das elastische Element eine zeitgenaue und unmittelbare Drehmomenterfassung.

Die Ausnehmung am zweiten Bauteil stellt damit eine Aufnahme für den Steg dar, in welcher der Steg innerhalb eines bestimmten Bereichs verdreh- bzw. verschwenkbar ist und damit das elastische Element entsprechend des verschwenkten Winkelbereichs beaufschlagt.

Mit Vorteil bildet die Ausnehmung, in die der Steg eingreift, gleichzeitig einen Anschlag zur Begrenzung des Winkelbereichs des Stegs. Dadurch wird sichergestellt, dass die beiden Bauteile keine zu hohe Verdrehung zueinander erfahren. Gleichzeitig wird auch gewährleistet, dass es aufgrund des Anschlags zu keiner Überlastung der elastischen Elemente kommen kann. Sollte z.B. ein Maschinenelement oder eine Armatur, an welcher die Vorrichtung zur Drehmomentbestimmung angeordnet ist, festgefahren sein, so ist es mit der Vorrichtung auch möglich, ein festgefahrenes Maschinenelement oder eine festgefahrene Armatur loszulösen, soweit das Drehmoment des Motors ausreicht.

Die Ausnehmung kann an der dem ersten Bauteil zugewandten Stirnseite des zweiten Bauteils und der Steg an der dem zweiten Bauteil zugewandten Stirnseite des ersten Bauteils angeordnet sein. Damit wird eine einfache Herstellung und Montage realisiert.

Vorteilhafterweise kann die Veränderung des Drehmoments über die elastischen Elemente drehrichtungsunabhängig sein, sodass in beiden Drehrichtungen bei Einwirken des gleichen Drehmoments die gleichen Kräfte übertragen werden. Es ist demnach sowohl ein Rechtslauf als auch ein Linkslauf der Vorrichtung und damit der Drehmomenterfassung möglich.

Mit besonderem Vorteil kann mindestens ein, vorzugsweise mindestens zwei elastische Elemente zu beiden Seiten des Stegs vorgesehen sein. So können insgesamt insbesondere vier elastische Elemente vorgesehen sein. Je nach Bedarf, beispielsweise in Anpassung an das zu übertragende Drehmoment, kann eine beliebige Anzahl von elastischen Elementen vorgesehen sein. Indem die elastischen Elemente zu beiden Seiten des Stegs vorgesehen sind, wird eine drehrichtungsunabhängige Drehmomentbestimmung ermöglicht. Je nachdem, in welche Richtung sich der Steg verdreht und damit das elastische Element mit Druck beaufschlagt, wird das gegenüberliegende elastische Element in entsprechender Weise entlastet.

Vorteilhafterweise können die elastischen Elemente in jeder Drehwinkelstellung der Bauteile mittels des Stegs mit Druck belastet sein. Damit ist gewährleistet, dass stets ein Federdruck auch an der entlasteten Feder anliegt. Auch die entlastete Feder bleibt damit in einer stabilen Position fixiert.

Zweckmäßigerweise können die elastischen Elemente zum Steg punkt- oder spiegelsymmetrisch angeordnet sein. Mit Vorteil können die elastischen Elemente auch zur Mittelsenkrechten des Stegs punkt- oder spiegelsymmetrisch angeordnet sein. Dadurch kann die Erfassung des Drehmoments drehrichtungsunabhängig werden und in beiden Drehrichtungen werden bei Einwirken des gleichen Drehmoments die gleichen Kräfte übertragen. Außerdem erfolgt eine symmetrisch gleichmäßige Einwirkung der Kräfte im Kupplungsbereich der beiden Bauteile.

Der Steg und/oder die Ausnehmung können sich jeweils zum jeweiligen Randbereich des ersten bzw. zweiten Bauteils hin erweitern. Dies ermöglicht eine einfache Montage, insbesondere ein einfaches Zusammensetzen, der einzelnen Bauteile und Elemente.

Vorteilhafterweise können die elastischen Elemente bezogen auf deren Längsachse in Richtung der Veränderung der Drehwinkelstellung orientiert sein. Dadurch wird eine optimale Druckbelastung der elastischen Elemente in Verdrehrichtung der Bauteile realisiert.

Zweckmäßigerweise kann als elastisches Element eine Feder, insbesondere eine Schraubenfeder, vorzugsweise eine Schraubendruckfeder, vorgesehen sein. Eine entsprechende Schraubenfeder oder Schraubendruckfeder hat den Vorteil, dass sie kostengünstig ist, dem einwirkenden Druck, je nach Federkonstante, in einem relativ großen Umfang standhält, auf einfache Weise in die für sie vorgesehene Ausnehmung einsetzbar ist sowie sich durch eine hohe Dauerfestigkeit und -stabilität auszeichnet.

Die ersten und zweiten Bauteile können bei dieser Vorrichtung so ausgestaltet sein, dass sie im gekoppelten Zustand nicht in axialer Richtung zueinander verschiebbar sind. Es ist also keine Axialbewegung der Bauteile zueinander notwendig. Daraus resultiert der Vorteil, dass die Kupplung sehr allgemein eingesetzt werden kann, ohne dass Sonderkomponenten erforderlich sind.

Der Steg kann zum zweiten Bauteil über einen Winkelbereich von +/- 30°, vorzugsweise über einen Winkelbereich von +/- 20°, besonders vorzugsweise über einen Winkelbereich von +/- 10° verschwenkbar sein. Ein entsprechend großes Drehmoment lässt sich damit bestimmen.

Vorteilhafterweise kann das erste und/oder das zweite Kodierelement als Kodierscheibe(n) ausgebildet sein. Derartige handelsübliche Kodierscheiben können in einfacher Weise an das erste und zweite Bauteil befestigt werden.

Damit die Drehbewegung der Kodierscheiben sowie die Verdrehung der Kodierscheiben zueinander bzw. die Drehbewegung und Verdrehung anderer Kodierelemente zueinander mittels der Lichtschranken erfasst werden kann, können die Kodierscheiben bzw. Kodierelemente in regelmäßiger Anordnung um ihren Umfang Ausnehmungen aufweisen. Durch die Ausnehmungen kann das Licht der Lichtschranken hindurchtreten, wodurch eine Erfassung der Drehbewegung möglich ist. Aus dem Zeitversatz der Lichtschrankensignale kann schließlich das Drehmoment ermittelt werden.

Die Vorrichtung kann ein Gehäuse aufweisen, welches das erste und zweite Bauteil umgibt. An diesem Gehäuse können auch die Lichtschranken befestigt werden, wobei sie zu den Kodierscheiben korrekt ausgerichtet sind.

Der erfindungsgemäße Antrieb zum Betätigen eines Maschinenelements oder eine Armatur, insbesondere einer Schieberarmatur, weist einen Motor auf, welcher einen Stator, einen Rotor sowie eine Motorwelle umfasst, wobei die Motorwelle mit einer Vorrichtung zur opto-elektronischen Drehmomentbestimmung - wie sie oben beschrieben ist - ausgestattet ist. Eine entsprechende Schieberarmatur kann z.B. Drehmomente in einem Bereich von ca. 150 Nm aufnehmen, die die Vorrichtung zur Drehmomentbestimmung auch erfassen kann.

Bei einem entsprechenden Antrieb zum Betätigen eines Maschinenelements oder einer Armatur sind die Motorwelle und/oder der Rotor nicht in axialer Richtung verschiebbar. Es ist zumindest nicht notwendig, dass Motorwelle und/oder der Rotor in axialer Richtung verschiebbar sind. Die Drehmomenterfassung erfolgt ausschließlich über die Rotationsbewegung des ersten und zweiten Bauteils zueinander.

Der Motor kann ein Gehäuse aufweisen, wobei sich jedoch die Vorrichtung zur opto-elektronischen Drehmomentbestimmung außerhalb dieses Gehäuses befindet. Auf diese Weise ist die Vorrichtung zur Drehmomentbestimmung leicht zugänglich und es steht ausreichend Platz zur Anbringung der Kodierscheiben sowie der Lichtschranken zur Verfügung.

### Beschreibung der Erfindung anhand von Ausführungbeispielen

Die Erfindung ist anhand von vorteilhaften Ausführungsbeispielen gemäß den Zeichnungsfiguren näher erläutert. Diese zeigen:
- Fig. 1: eine Prinzipdarstellung einer Vorrichtung zur opto-elektronischen Drehmomentbestimmung, teilweise im Schnitt (Ausschnitt aus Fig. 2) mit einer elektronischen Auswerteeinheit;
- Fig. 2: eine Prinzipdarstellung eines Antriebs zum Betätigen eines Maschinenelements, teilweise im Schnitt; sowie
- Fig. 3: drei perspektivische Darstellungen (Fig. 3a - 3c) im Bereich der ersten und zweiten Bauteile, wobei die Bauteile in den Fig. 3a und 3b nicht gekoppelt und in Fig. 3c gekoppelt sind.

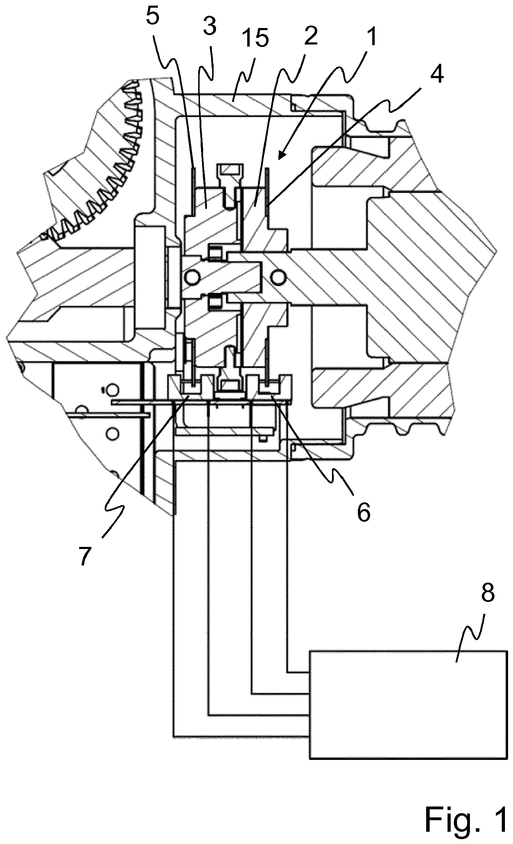

Bezugsziffer 1 bezeichnet die erfindungsgemäße Vorrichtung zur opto-elektronischen Drehmomentbestimmung in ihrer Gesamtheit. Wie aus Fig. 1 hervorgeht, umfasst die Vorrichtung ein erstes Bauteil 2 sowie ein zweites Bauteil 3. Das erste Bauteil 2 ist mit einem Antriebselement und das zweite Bauteil 3 mit einem Abtriebselement verbunden. Ferner ist eine erste Kodierscheibe 4 vorgesehen, die am ersten Bauteil 2 drehfest angeordnet ist. Eine zweite Kodierscheibe 5 ist am zweiten Bauteil 3 drehfest angeordnet. Eine erste Lichtschranke 6 tastet die Drehbewegung der ersten Kodierscheibe 4 ab und eine zweite Lichtschranke 7 tastet die Drehbewegung der zweiten Kodierscheibe 5 ab. Eine elektronische Auswerteeinheit 8 dient der Erfassung und Auswertung der von der ersten Lichtschranke 6 sowie von der zweiten Lichtschranke 7 stammenden Signale. Weiterhin dient diese dazu, bestimmte Drehmomentkennlinien abzuspeichern. Diese erlauben es, aktuelle Messungen mit früheren Messungen zu vergleichen.

Weiterhin sind zwischen dem ersten Bauteil 2 und dem zweiten Bauteil 3 vier Federn 13 vorgesehen, die gemäß einem darauf wirkenden Drehmoment verformbar sind, und bei Veränderung des Drehmoments eine Veränderung der Drehwinkelstellung der Bauteile 2, 3 zueinander erfassbar und daraus das Drehmoment ermittelbar ist. Die ersten und zweiten Bauteile 2, 3 sind dabei im gekoppelten Zustand nicht in axialer Richtung zueinander verschiebbar.

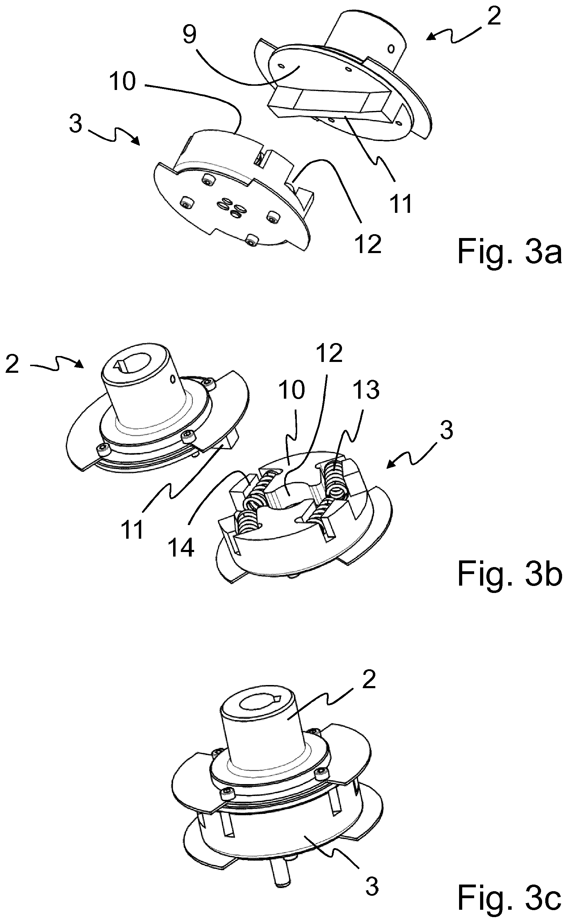

Das erste und zweite Bauteil 2, 3 sind in Fig. 3a-c detailliert dargestellt. Das erste Bauteil 2 weist einen Steg 11 auf, der zum zweiten Bauteil 3 über einen festgelegten Winkelbereich verschwenkbar ist. Der Steg 11 wirkt bei Verdrehung der Bauteile 2, 3 auf die Federn 13 ein. Insgesamt bilden die beiden Bauteile 2, 3 mit ihrem Steg 11 und den Federn 13 einen drehmomentübertragenden Verbund. Figuren 3a und 3b zeigen die beiden Bauteile 2, 3 im nicht gekoppelten Zustand, sodass die einzelnen Ausgestaltungen und Elemente sichtbar sind. Fig. 3c zeigt die beiden Bauteile 2, 3 im gekoppelten Zustand.

Bei Erhöhung des Drehmoments, beispielsweise dann, wenn an dem mit dem ersten Bauteil 2 verbundenen Antriebselement eine Drehkraft angreift, überträgt der Steg 11 die Kraft in einer Richtung auf die Federn 13, welche sich entsprechend der einwirkenden Kraft verformen. Dies bedeutet, dass zwei Federn 13 eingedrückt werden, während sich die anderen beiden Federn 13 ausdehnen. Die damit erfolgte Drehwinkelstellung der Bauteile 2, 3 zueinander ist mittels der Kodierscheiben 4, 5 und der daran angeordneten Lichtschranken 6, 7 erfassbar. Über den Zeitversatz der Signale der Lichtschranken 6, 7 wird eine Umrechnung in das einwirkende Drehmoment ermöglicht. Mittels der Federn 13 sowie der unmittelbar durch den Steg 11 übertragenen Kraft ist die Anordnung nahezu reibungsfrei und äußerst reaktionsschnell.

Das zweite Bauteil 3 weist eine Ausnehmung 12 auf, in die die Federn 13 hineinragen und in die der Steg 11 im gekoppelten Zustand der beiden Bauteile eingreift. Innerhalb der Ausnehmung 12 ist der Steg 11 sodann in dem festgelegten Winkelbereich verschwenkbar und beaufschlagt die Federn 13 je nach Drehmoment mit mehr oder weniger Kraft. Die Ausnehmung 12 bildet gleichzeitig einen Anschlag zur Begrenzung des verschwenkbaren Winkelbereichs des Stegs 11.

Die Ausnehmung 12 ist an der dem ersten Bauteil 2 zugewandten Stirnseite 10 des zweiten Bauteils 3 angeordnet. Der Steg 11 ist an der dem zweiten Bauteil 3 zugewandten Stirnseite 9 des ersten Bauteils 2 angeordnet. Die Federn 13 befinden sich in Ausnehmungen 14, welche in die Ausnehmung 12 münden. Die in den Ausnehmungen 14 angeordneten Federn 13 ragen dabei in die Ausnehmung 12 hinein, sodass sie mit dem Steg 11 beaufschlagbar sind.

Die Federn 13 sind zu beiden Seiten des Stegs 11 spiegelsymmetrisch angeordnet. Die Veränderung des Drehmoments ist damit drehrichtungsunabhängig und sowohl für den Rechts- als auch Linkslauf geeignet.

Die Federn 13 sind in jeder Drehwinkelstellung der Bauteile 2, 3 mittels des Stegs 11 mit Druck belastet. Dadurch liegt auch an der vergleichsweise entlasteten Feder 13 stets ein Federdruck an.

Der Steg 11 sowie die Ausnehmung 12 erweitern sich jeweils zum jeweiligen Randbereich des ersten bzw. zweiten Bauteils 2, 3. Diese Ausgestaltung hat den Vorteil, dass damit die Montage erleichtert wird.

Die Federn 13 sind bezogen auf deren Längsachsen in Richtung der Veränderung der Drehwinkelstellung orientiert bzw. positioniert und nehmen so die über den Steg 11 einwirkende Kraft direkt für deren Verformung in Längsrichtung auf.

Der Steg 11 kann zum zweiten Bauteil 3 über einen Winkelbereich von +/- 30°, vorzugsweise über einen Winkelbereich von +/- 20°, besonders vorzugsweise über einen Winkelbereich von +/- 10° verschwenkbar sein. Ein entsprechender Drehmomentbereich wird damit erfasst.

Sollte es im Bedarfsfall notwendig sein, ein höheres Drehmoment zu erfassen, dann kann die Anzahl der Federn beliebig erhöht werden und/oder Federn mit einer höheren Federkonstante eingesetzt werden.

Wie zudem aus den Fig. 3a-c hervorgeht, weisen die Kodierscheiben 4, 5 jeweils direkt gegenüberliegend Ausnehmungen 14 auf, durch welche das Licht der Lichtschranken 6, 7 fällt. Aus dem Zeitversatz der erfassten Lichtschrankensignale der Kodierscheiben 4 und 5 erfolgt in der elektronischen Auswerteeinheit 8 eine Ermittlung bzw. Umrechnung in das Drehmoment.

Die Vorrichtung 1 weist zudem ein Gehäuse 15 auf, welches das erste und zweite Bauteil 2, 3 umgibt. Auch die Kodierscheiben 4, 5 können demnach zweckmäßigerweise innerhalb des Gehäuses 15 angeordnet und somit von äußeren Einflüssen geschützt sein.

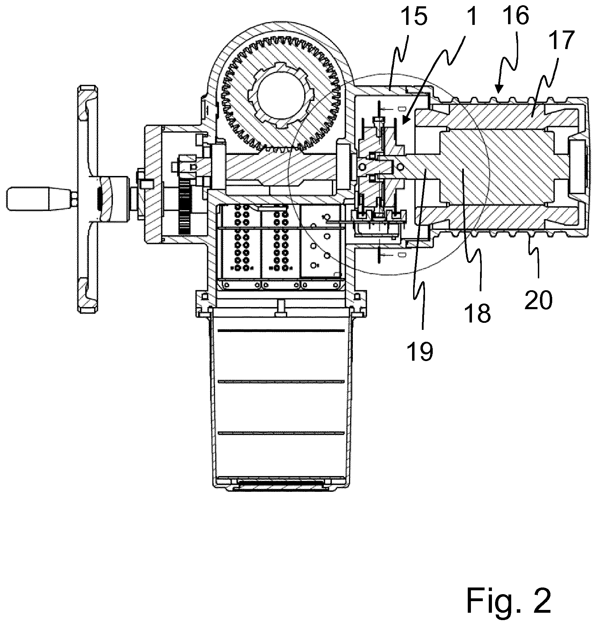

In Fig. 2 ist ein Antrieb zum Betätigen eines Maschinenelements oder einer Armatur, insbesondere einer Schieberarmatur, dargestellt. Dieser Antrieb kann einen Motor 16 aufweisen, der einen Stator 17, einen Rotor 18 sowie eine Motorwelle 19 umfassen kann. Die Motorwelle 19 ist an ihrem vorderen Ende mit der oben beschriebenen Vorrichtung 1 zur opto-elektronischen Drehmomentbestimmung ausgestattet. Im dargestellten Ausführungsbeispiel ist sowohl die Motorwelle 19 als auch der Rotor 18 nicht in axialer Richtung verschiebbar, was für die Drehmomenterfassung auch nicht erforderlich ist.

Mit dem dargestellten Antrieb können z.B. Schieberarmaturen (nicht dargestellt), z.B. gehäuselosen Schieberarmaturen zum Absperren von Wasserströmen an Rohre oder Kanalleitungen, betätigt werden. Mittels der Vorrichtung zur Drehmomentbestimmung kann ein maximales Drehmoment festgelegt werden, damit z.B. eine Schieberarmatur z.B. im Falle eines Hindernisses nicht beschädigt wird. Bei Überschreitung des festgelegten Drehmoments kann z.B. ein Alarm ausgelöst werden.

## Patentansprüche

1. Vorrichtung zur opto-elektronischen Drehmomentbestimmung mit
einem ersten Bauteil (2),
einem zweiten Bauteil (3),
wobei das erste Bauteil (2) mit einem Antriebselement und das zweite Bauteil (3) mit einem Abtriebselement verbindbar ist oder umgekehrt,
einem ersten Kodierelement, das am ersten Bauteil (2) angeordnet ist,
einem zweiten Kodierelement, das am zweiten Bauteil (3) angeordnet ist,
einer ersten Lichtschranke (6), die die Drehbewegung des ersten Kodierelements abtastet,
einer zweiten Lichtschranke (7), die die Drehbewegung des zweiten Kodierelements abtastet,
einer elektronischen Auswerteeinheit (8) zur Erfassung und Auswertung der von der ersten Lichtschranke (6) sowie zweiten Lichtschranke (7) stammenden Signale, wobei
zwischen dem ersten (2) und dem zweiten Bauteil (3) mindestens ein elastisches Element vorgesehen ist, das gemäß einem darauf wirkenden Drehmoment verformbar ist, und bei Veränderung des Drehmoments eine Veränderung der Drehwinkelstellung der Bauteile (2, 3) zueinander erfassbar und daraus das Drehmoment ermittelbar ist, **dadurch gekennzeichnet, dass**
das erste Bauteil (2) einen Steg (11) aufweist, der Steg (11) zum zweiten Bauteil (3) über einen festgelegten Winkelbereich verschwenkbar ist,
nur das zweite Bauteil (3) das elastische Element umfasst, der Steg (11) am elastischen Element angreift und das elastische Element bei Verschwenken des Stegs (11) unmittelbar von diesem mit einer Kraft beaufschlagbar ist,
das zweite Bauteil (3) mindestens eine Ausnehmung (12) aufweist, in die das elastische Element hineinragt und in die der Steg (11) eingreift, wobei das elastische Element in einer weiteren Ausnehmung (14) am zweiten Bauteil (3) angeordnet ist und von dort aus in die Ausnehmung (12) hineinragt.

2. Vorrichtung nach Anspruch 1, **dadurch gekennzeichnet, dass** die Ausnehmung (12) einen Anschlag zur Begrenzung des Winkelbereichs des Stegs (11) bildet.

3. Vorrichtung nach mindestens einem der Ansprüche 1 oder 2, **dadurch gekennzeichnet, dass** die Ausnehmung (12) an der dem ersten Bauteil (2) zugewandten Stirnseite (10) des zweiten Bauteils (3) und der Steg (11) an der dem zweiten Bauteil (3) zugewandten Stirnseite (9) des ersten Bauteils (2) angeordnet ist.

4. Vorrichtung nach mindestens einem der vorhergehenden Ansprüche, **dadurch gekennzeichnet, dass** mindestens ein elastisches Element zu beiden Seiten des Stegs (11) vorgesehen ist.

5. Vorrichtung nach mindestens einem der vorhergehenden Ansprüche, **dadurch gekennzeichnet, dass** die elastischen Elemente in jeder Drehwinkelstellung der Bauteile (2, 3) mittels des Stegs (11) mit Druck belastet sind.

6. Vorrichtung nach mindestens einem der vorhergehenden Ansprüche, **dadurch gekennzeichnet, dass** die elastischen Elemente zum Steg (11) punkt- oder spiegelsymmetrisch angeordnet sind.

7. Vorrichtung nach mindestens einem der vorhergehenden Ansprüche, **dadurch gekennzeichnet, dass** der Steg (11) und/oder die Ausnehmung (12) sich jeweils zum jeweiligen Randbereich des ersten bzw. zweiten Bauteils (2 bzw. 3) hin erweitern/erweitert.

8. Vorrichtung nach mindestens einem der vorhergehenden Ansprüche, **dadurch gekennzeichnet, dass** das elastische Element bzw. die elastischen Elemente bezogen auf dessen Längsachse bzw. deren Längsachsen in Richtung der Veränderung der Drehwinkelstellung orientiert sind.

9. Vorrichtung nach mindestens einem der vorhergehenden Ansprüche, **dadurch gekennzeichnet, dass** als elastisches Element eine Feder (13) vorgesehen ist.

10. Vorrichtung nach mindestens einem der vorhergehenden Ansprüche, **dadurch gekennzeichnet, dass** der Steg (11) zum zweiten Bauteil (3) über einen Winkelbereich von +/-30° verschwenkbar ist.

11. Vorrichtung nach mindestens einem der vorhergehenden Ansprüche, **dadurch gekennzeichnet, dass** das erste und/oder das zweite Kodierelement als Kodierscheibe(n) (4, 5) ausgebildet ist.

12. Vorrichtung nach mindestens einem der vorhergehenden Ansprüche, **dadurch gekennzeichnet, dass** die Kodierelemente in regelmäßiger Anordnung um ihren Umfang Ausnehmungen (14) aufweisen.

13. Vorrichtung nach mindestens einem der vorhergehenden Ansprüche, **dadurch gekennzeichnet, dass** die Vorrichtung (1) ein Gehäuse (15) aufweist, welches das erste und zweite Bauteil (2, 3) umgibt.

14. Antrieb zum Betätigen eines Maschinenelements oder einer Armatur mit
einem Motor (16) umfassend einen Stator (17), einen Rotor (18) sowie eine Motorwelle (19), **dadurch gekennzeichnet, dass**
die Motorwelle (19) mit einer Vorrichtung (1) zur opto-elektronischen Drehmomentbestimmung nach mindestens einem der Ansprüche 1 13 ausgestattet ist.

15. Antrieb nach Anspruch 14, **dadurch gekennzeichnet, dass** der Motor (16) ein Gehäuse (20) aufweist und sich die Vorrichtung (1) zur opto-elektronischen Drehmomentbestimmung außerhalb des Gehäuses (20) befindet.

## Claims

1. Device for opto-electronic torque determination with
a first component (2),
a second component (3),
where the first component (2) can be connected with a drive element and the second component (3) with an output element or vice versa, a first coding element, which is arranged on the first component (2),
a second coding element, which is arranged on the second component (3)
a first light barrier (6), which scans the rotational movement of the first coding element,
a second light barrier (7), which scans the rotational movement of the second coding element,
an electronic evaluation unit (8) for the detection and evaluation of the signals originating from the first light barrier (6) and the second light barrier (7), where
at least one elastic element is provided between the first (2) and the second component (3), which is deformable according to a torque acting on it, and if a change in the torque occurs, a change in the rotational angle position of the components (2, 3) relative to each other is detectable and from this the torque can be determined, **characterised in that** the first component (2) has a web (11), the web (11) can be turned towards the second component (3) over a defined angle range,
only the second component (3) comprises the elastic element, the web (11) acts on the elastic element and the elastic element, on turning the web (11), can be impinged by it with a force,
the second component (3) has at least one recess (12), in which the elastic element protrudes and in which the web (11) engages, where the elastic element is arranged in a further recess (14) on the second component (3) and from there protrudes into the recess (12).

2. Device according to claim 1, **characterised in that** the recess (12) forms a stop for limiting the angle range of the web (11).

3. Device according to at least one of the claims 1 or 2, **characterised in that** the recess (12) is arranged on the face (10) of the second component (3) facing the first component (2) and the web (11) is arranged on the face (9) of the first component (2) facing the second component (3).

4. Device according to at least one of the preceding claims, **characterised in that** at least one elastic element is provided on both sides of the web (11).

5. Device according to at least one of the preceding claims, **characterised in that** the elastic elements are pressurised in each rotational angle position of the components (2, 3) by means of the web (11).

6. Device according to at least one of the preceding claims, **characterised in that** the elastic elements are arranged point or mirror symmetrically relative to the web (11).

7. Device according to at least one of the preceding claims, **characterised in that** the web (11) and/or the recess (12) extend/extends to the respective edge area of the first or second component (2 or 3 respectively).

8. Device according to at least one of the preceding claims, **characterised in that** the elastic element or rather the elastic elements is/are orientated, relative to its longitudinal axis or their longitudinal axes, in the direction of the change in the rotational angle position.

9. Device according to at least one of the preceding claims, **characterised in that** a spring (13) is provided as the elastic element.

10. Device according to at least one of the preceding claims, **characterised in that** the web (11) can be turned towards the second component (3) over an angle range of +/-30°.

11. Device according to at least one of the preceding claims, **characterised in that** the first and/or the second coding element are/is formed as coding disc(s) (4, 5).

12. Device according to at least one of the preceding claims, **characterised in that** the coding elements have recesses (14) in a regular arrangement around its circumference.

13. Device according to at least one of the preceding claims **characterised in that** the device (1) has a housing (15), which encloses the first and second component (2, 3).

14. Drive for actuating a machine element or a valve with a motor (16) comprising a stator (17), a rotor (18) and a motor shaft (19), **characterised in that** the motor shaft (19) is equipped with a device (1) for opto-electronic torque determination according to at least one of the claims 1 - 2.

15. Drive according to claim 14, **characterised in that** the motor (16) has a housing (20) and the device (1) for opto-electronic torque determination is positioned outside the housing (20).

## Revendications

1. Dispositif de détermination opto-électronique du couple avec
un premier composant (2),
un deuxième composant (3),
dans lequel le premier composant (2) pouvant être connecté à une unité d'entraînement et le deuxième composant (3) pouvant être connecté à un élément de sortie ou vice versa, un premier élément de codage étant disposé sur le premier composant (2),
un deuxième élément de codage étant disposé sur le deuxième composant (3),
une première barrière immatérielle (6) détectant le mouvement de rotation du premier élément de codage,
une deuxième barrière immatérielle (7) détectant le mouvement de rotation du deuxième élément de codage,
une unité d'interprétation électronique (8) d'enregistrement et d'évaluation des signaux provenant de la première barrière immatérielle (6) et de la deuxième barrière immatérielle (7), dans laquelle
au moins un élément élastique étant prévu entre le premier (2) et le deuxième composant (3) qui est déformable en fonction d'un couple de rotation agissant sur cet élément, et en cas de variation du couple de rotation, une modification de la position angulaire de rotation des composants (2, 3) l'un par rapport à l'autre pouvant être détectée et le couple de rotation pouvant être déterminé à partir de là, **caractérisé en ce que**
le premier composant (2) possède une entretoise (11) pouvant être pivotée par rapport au deuxième composant (3) sur une plage angulaire fixe,
seul le deuxième composant (3) comprend l'élément élastique, que l'entretoise (11) s'applique contre l'élément élastique et que l'élément élastique est soumis à une force provenant directement du mouvement de pivotement de l'entretoise (11),
le deuxième composant (3) présente au moins un évidement (12) dans lequel l'élément élastique fait saillie et dans lequel l'entretoise (11) s'engage, l'élément élastique étant disposé dans un autre évidement (14) sur le deuxième composant (3) et faisant saillie de là dans l'évidement (12).

2. Dispositif selon revendication 1, **caractérisée en ce que** l'évidement (12) forme une butée de limitation de la plage angulaire de l'entretoise (11).

3. Dispositif selon au moins l'une des revendication 1 ou 2, **caractérisé en ce que** l'évidement (12) est disposé sur la face frontale (10) du deuxième composant (3) tournée vers le premier composant (2) et l'entretoise (11) est disposée sur la face frontale (9) du premier élément (2) tournée vers le deuxième élément (3).

4. Dispositif selon au moins l'une des revendications précédentes, **caractérisé en ce qu'au** moins un élément élastique est prévu des deux côtés de l'entretoise (11).

5. Dispositif selon au moins l'une des revendications précédentes, **caractérisé en c**e **que** les éléments élastiques sont mis sous pression au moyen de l'entretoise (11) dans chaque position angulaire de rotation des composants (2, 3).

6. Dispositif selon au moins l'une des revendications précédentes, **caractérisé en ce que** les éléments élastiques sont disposés de manière ponctuelle ou symétrique par rapport à l'entretoise (11).

7. Dispositif selon au moins l'une des revendications précédentes, **caractérisé en ce que** l'entretoise (11) et/ou l'évidement (12) s'élargit/s'élargissent vers la zone limitrophe du premier ou du deuxième composant (2 ou 3).

8. Dispositif selon au moins l'une des revendications précédentes, **caractérisé en ce que** l'élément élastique ou les éléments élastiques est/sont orienté/s dans le sens de la modification de la position angulaire de rotation par rapport à son/leur axe/s longitudinal/aux.

9. Dispositif selon au moins l'une des revendications précédentes, **caractérisé en ce qu'un** ressort (13) est prévu comme élément élastique.

10. Dispositif selon au moins l'une des revendications précédentes, **caractérisé en ce que** l'entretoise (11) peut pivoter par rapport au deuxième composant (3) sur une plage angulaire de +/- 30°.

11. Dispositif selon au moins l'une des revendications précédentes, **caractérisé en ce que** le premier et/ou le deuxième élément de codage a la forme d'un disque/de disques de codage (4, 5).

12. Dispositif selon au moins l'une des revendications précédentes, **caractérisé en ce que** les éléments de codage présentent des évidements disposés à intervalles réguliers sur leur circonférence.

13. Dispositif selon au moins l'une des revendications précédentes, **caractérisé en ce que** le dispositif (1) est équipé d'un boîter (15) qui entoure le premier et le deuxième composant (2, 3).

14. Entraînement pour l'actionnement d'un organe de machine ou d'un induit avec un moteur (16) comprenant un stator (17), un rotor (18) et un arbre moteur (19), **caractérisé en ce que** l'arbre moteur (19) est équipé d'un dispositif (1) pour la détermination opto-électronique du couple selon au moins l'une des revendications précédentes de 1 à 2.

15. Entraînement selon la revendication 14, **caractérisé en ce que** le moteur (16) comporte un boîtier (20) et le dispositif (1) de définition opto-électronique du couple se situe en dehors du boîtier (20).
